# EUROPÄISCHE PATENTSCHRIFT

(11) **EP 0 956 734 B1**
(45) Veröffentlichungstag und Bekanntmachung des Hinweises auf die Patenterteilung: **06.09.2006**
(21) Anmeldenummer: 98904006.8
(22) Anmeldetag: 07.01.1998
(51) Int. Cl.: H04Q 11/04

(54) **VERFAHREN ZUM DRAHTLOSEN ÜBERMITTELN VON NACH EINER BREITBAND-ÜBERTRAGUNGSTECHNOLOGIE KONZIPIERTEN BREITBAND-ORIENTIERTEN DATENSTRÖMEN**
METHOD FOR WIRELESS TRANSMISSION OF BROADBAND ORIENTED DATA STREAMS DESIGNED IN ACCORDANCE WITH BROADBAND TRANSMISSION TECHNOLOGY
PROCEDE DE TRANSMISSION SANS FIL DE FLUX DE DONNEES ORIENTES A LARGE BANDE, CONNUS SELON UNE TECHNOLOGIE DE TRANSMISSION A LARGE BANDE

(30) Priorität: 31.01.1997 DE 19703614
(43) Veröffentlichungstag der Anmeldung: 17.11.1999
(73) Patentinhaber: SIEMENS AKTIENGESELLSCHAFT, 80333 München (DE)
(72) Erfinder: STOLL, Detlef, D-81377 München (DE); BOGNER, Werner, D-80933 München (DE)
(86) Internationale Anmeldenummer: PCT/DE1998/000028
(87) Internationale Veröffentlichungsnummer: WO 1998/034432

(56) Entgegenhaltungen:
- EP-A- 0 713 347
- EP-A- 0 719 062
- EP-A- 0 755 164
- US-A- 5 544 161
- AIKAWA S ET AL: "1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. VOL. 1, 23.Juni 1996, INSTITUTE OF ELECTRICAL & ELECTRONICS ENGINEERS, Seiten 454-458, XP000625714
- ZIMMERMANN T: "CDMA UND ATM - ZWEI TECHNOLOGIEN, EIN ZIEL ENTWICKLUNG EINER ATM-KOMPATIBLEN LUFTSCHNITTSTELLE AUF CDMA -BASISFUR ZUKUNFTIGE FUNKANWENDUNGEN" TELCOM REPORT, Bd. 18, Nr. 2, 1.März 1995, Seiten 60-63, XP000510932

## Beschreibung

Die zunehmende Nutzerakzeptanz sowie der technologische Fortschritt bei der Entwicklung neuer Breitbanddienste - auch als Multimedia-Dienste bezeichnet - führen zu einem zunehmenden Bedarf an breitbandigen Übertragungsressourcen bei bereits bestehenden, d.h. installierten Kommunikationsnetzen. Insbesondere die Technik und Architektur des Teilnehmeranschlußnetzes - ACCESS-Network - werden durch die veränderten Marktanforderungen, Liberalisierung des Telekommunikationsmarktes und dessen technologischen Fortschritte beeinflußt. Die aktuell angebotenen Multimedia-Dienste lassen sich in private und geschäftliche Anwendungen unterteilen. Geschäftliche Anwendungen sind schwerpunktmäßig im Bereich Telekommunikation angeordnet und gewährleisten die zuverlässige Übertragung von Sprache und Daten unter Bereitstellung der dazu erforderlichen Übertragungs-Ressourcen, beispielsweise für ein "Joint Additing" oder für die Durchführung einer Videokonferenz. Beispiele für private Anwendungen sind "Advanced pay per view" - APPV -, "Video on demand" - VOD -, Videospiele, elektronische, interaktive Informationen oder Weiterbildungen sowie elektronische Transaktionen - z.B. Teleshopping, Telebanking, Reisebuchungen - sowie elektronische Kommunikation - z.B. Videotelefonie oder Home-working - Datennetzzugriff. Um die Multimedia-Dienste effektiv und wirtschaftlich den Teilnehmern bereitzustellen bzw. zu übertragen, ist ein breitbandiges Kommunikationsnetz, insbesondere ein breitbandiges Teilnehmeranschlußnetz erforderlich.

Im Telecom Report Nr. 17 (1994) Heft 5 "End-to-end-Produktstrategie für Multimedia" Seite 190 bis 193 ist ein für die Bereitstellung von Multimedia-Diensten ausgelegtes breitbandiges Kommunikationsnetz dargestellt. Dieses ist unter anderem in einen Teilnehmerbereich (CPE), einen Teilnehmerzugangsbereich (ACCESS) und in ein Kernnetz (CORE) unterteilt. Im privaten Teilnehmerbereich gibt es unterschiedliche Endgeräte. Unterhaltungs- und Informationsdienste werden üblicherweise über das Fernsehgerät (TV) in Anspruch genommen. Andere Dienste aus dem Bereich Transaktion - z.B. Telebanking - werden über Personalcomputer abgewickelt. Um die Nutzung von Multimedia-Diensten über Fernsehgerät oder Personalcomputer zu ermöglichen, müssen diese zusätzliche Funktionen, beispielsweise zur Dekomprimierung der Digitalsignale einschließlich der Umsetzung in das geforderte Ausgabesignal (z.B. PAL) sowie Netzsignalisierung und Bereitstellung einer benutzerfreundlichen Bedienschnittstelle, aufweisen. Für aktuelle Fernsehgeräte werden diese Funktionen durch eine allgemein als "SET-TOP-BOX" bezeichnete Einrichtung realisiert. Die Set-Top-Box kann auch direkt in das Fernsehgerät integriert sein. Die Set-Top-Box weist weitere Schnittstellen auf, beispielsweise für Infrarot-Fernbedienung, Audiosignal-Ausgang, Smart Card und Joystic.

Der Netzabschluß - NT - trennt das Teilnehmerzugangsnetz - ACCESS-Network - von den Teilnehmereinrichtungen und verbindet die verschiedenen Verkabelungen im Haus mit einer einzigen Übertragungskomponente. Wichtigste Übertragungskomponente im Teilnehmerzugangsnetz sind die Lichtwellenleiter/Koaxial-Hybridtechnik - HFC - und Fiber-in-the-loop-Technik - FITL. Das hybride Fiber-Koax-Anschlußnetz - HFC - verwendet ein Kabel-Fernsehnetz - CATV - in Verbindung mit Lichtwellenleiter-Technik - LWL -, wobei ein Lichtwellenleiter zu einem Versorgungsbereich von rund 200 bis 400 Teilnehmern geführt wird. Die Teilnehmereinrichtungen innerhalb des Versorgungsbereiches werden in einer Baumstruktur über Koaxialkabel angeschlossen. Über dieses Teilnehmerzugangsnetz werden sämtliche Dienste bereitgestellt bzw. transportiert. Die Übertragung der Informationen über die Übertragungsmedien erfolgt trägermoduliert in analoger Form. Dazu werden Digital-Signale - beispielsweise Sprache, "Video on demand", Spiele usw. - zunächst mittels eines Modulationsverfahrens in analoge Signale gewandelt - z.B. durch 64-fach Quadratur-Amplitudenmodulation QAM - und anschließend auf ein Trägersignal moduliert. Bei diesem Verfahren wird beispielsweise eine Übertragungsrate von rund 40 Mbit/s in einem 8-MHz PAL-Kanal erreicht. Der Vorteil dieser Übertragungstechnik ist die kosteneffektive Koexistenz heutiger Dienste, wie Analog-Verteilfernsehen mit zukünftigen Multimedia-Diensten.

Fiber-in-the-loop - FITL - Lösungen basieren auf digitalen Basisbandübertragungen. Hierbei wird der Lichtwellenleiter unter Einsatz von passiven optischen Netzen - PON - zu den versorgungsbereichen von rund 4 bis 50 Teilnehmern geführt. Die Teilnehmereinrichtungen werden über Kupferdoppeladern sternförmig an optische Netzeinrichtungen - ONU - angeschlossen. Über diese. Anschlußtechnik können bis auf die traditionelle Fernsehverteilung alle Dienste - z.B. Sprache, Interaktives Video und Daten - digital übertragen werden.

Das Kernnetz - CORE - verknüpft zum einen den Teilnehmerzugangsbereich - ACCESS - mit den Vermittlungssystemen und zum anderen die Vermittlungssysteme untereinander. Multimedia-dienste stellen unterschiedlichste Anforderungen an die Vermittlungssysteme. Über das Kernnetz muß flexibel und effektiv das hohe Aufkommen an digitalisierter Information für den privaten und geschäftlichen Bereich übertragen werden. Für die gleichzeitige Vermittlung von isochronen oder burstartigen, unidirektionalen, asymmetrischen oder bidirektionalen Verbindungen, stellt die Asynchrone-Transfer-Modus-Technolgie - ATM - die Schlüsseltechnologie in der Vermittlungs- und Übertragungstechnologie dar.

Durch die Verschmelzung der Bereiche Telekommunikation, Konsumelektronik, elektronische Datenverarbeitung - EDV - und Unterhaltung und durch die daraus entstandene Forderung nach Einführung einer breitbandigen Infrastruktur, insbesondere im Teilnehmeranschlußbereich - ACCESS-Network - müssen bestehende Kommunikationsnetze modernisiert bzw, erweitert und neue Breitband-Kommunikationsnetze installiert werden.

In EP 0 719 062 ist beispielsweise ein drahtloses Breitband-Kommunikationssystem in Verbindung mit einer dazu ausgelegten Netzwerkarchitektur beschrieben, durch welche im Kommunikationssystem angeordneten, fest installierten oder mobilen dezentralen Kommunikationseinheiten unterschiedliche Schmalband- und Breitbanddienste bereitgestellt werden. Die zwischen einer zentralen Breitband-Kommunikationseinrichtung und der dezentralen Kommunikationseinrichtung angeordneten, drahtlosen Übertragungsressourcen bzw. die für eine Übermittlung von Informationen nutzbare drahtlose Übertragungsbandbreite ist in mehrere kleinere, zuteilbare Übertragungsressourcen-Einheiten unterteilt. Diese können unterschiedliche Bit-Übertragungsraten aufweisen, wobei die unterschiedlichen Übertragungsressourcen-Einheiten jeweils in Abhängigkeit von den durch die Teilnehmer angeforderten Bit-Übertragungsraten bzw. Service-Klassen den jeweiligen dezentralen Kommunikationseinrichtungen dynamisch zuordenbar sind. Hierfür wird eine Kombination unterschiedlicher Funk- und Übertragungstechnologien - z.B. CDMA und TDM - eingesetzt, für deren Steuerung spezielle Steuerungseinrichtungen erforderlich sind.

Der Erfindung liegt die Aufgabe zugrunde, bestehende Kommunikationsnetze, insbesondere Teilnehmerzugangsnetze besonders einfach und wirtschaftlich für die Bereitstellung von zusätzlichen Breitband-Diensten zu erweitern. Die Aufgabe wird durch eine Kommunikationsanordnung ausgehend von einer Kommunikationsanordnung gemäß den Merkmalen des Oberbegriffs des Patentanspruchs 1 durch dessen kennzeichnende Merkmale gelöst.

Bei der erfindungsgemäßen Kommunikationsanordnung zum Übermitteln von breitband-orientierten Datenströmen zwischen einer zentralen Breitband-Kommunikationseinrichtung und zumindest einer dezentralen Breitband-Kommunikationseinrichtung ist die dezentrale Breitbänd-Kommunikationseinrichtung mit zumindest einer Basiseinrichtung verbunden, wobei der Basiseinrichtung eine drahtlose Übertragungseinrichtung zur drahtlosen Übermittlung der breitband-orientierten Datenströme zugeordnet ist. Der zumindest einen dezentralen Breitband-Kommunikationseinrichtung ist zumindest eine Anschlußeinrichtung zum Empfangen der drahtlos übermittelten, breitband-orientierten Datenströme zugeordnet. Der wesentliche Aspekt der erfindungsgemäßen Kommunikationsanordnung besteht darin, daß in der Basiseinrichtung Mittel zur Aufbereitung von übermittelten, nach dem Asynchronen Transfer Modus ATM konzipierten ATM-Datenströmen für eine Punkt-Zu-Mehrpunkt-Übertragung vorgesehen sind. Die Basiseinrichtung weist Modulierungsmittel zur Umwandlung der aufbereiteten ATM-Datenströme in ein analoges Signal auf, wobei die Umwandlung in Abhängigkeit der Übertragungsgeschwindigkeit der aufbereiteten ATM-Datenströme erfolgt. Die drahtlose Übertragungseinrichtung weist Sendemittel zum kontinuierlichen Aussenden des analogen Signals bzw. der aufbereiteten ATM-Datenströme an die zumindest eine Anschlußeinrichtung auf. Weiterhin sind in der Anschlußeinrichtung Demodulierungsmittel zur Umwandlung des empfangenen analogen Signals in entsprechende ATM-Datenströme angeordnet.

Der Vorteil des erfindungsgemäßen Verfahrens besteht darin, daß durch die Übermittlung von Breitband-orientierten Datenströmen über das Übertragungsmedium "Funkkanal" auf hohe Bitübertragungsraten aufbauende Breitbanddienste bzw. Breitbandanwendungen auf einfache, d.h. wirtschaftliche Weise realisierbar sind. Moderne Multimedia-Dienste können ohne kostenaufwendig zu verlegende Lichtwellenleiter bzw. Kupferkabel eingeführt werden. Zusätzlich wird durch das drahtlose Heranführen der eine hohe Datenübertragungsrate bereitstellenden Breitband-Übertragungstechnik über das Teilnehmerzugangsnetz bis zum Endteilnehmer das wirtschaftliche Bereitstellen zusätzlicher Breitband-Dienste, wie interaktive Multimedia-Dienste, Online-Dienste oder "Video on demand" sowie Breitband-Daten-Dienste - z.B. drahtlose LAN-Verbindungen und hochbitratige Datendienste - beschleunigt. Durch die Integration von bereits in bestehenden breitbandigen Kommunikationsnetzen, insbesondere Kernnetzen, erfolgreich eingesetzten Übertragungstechnologien müssen keine neuen auf die Vermittlung und Übertragung hoher Bitraten ausgelegte Einrichtungen entwickelt werden; vielmehr können bereits verfügbare und ausgereifte Einrichtungen bzw. Gerätefamilien ohne großen Aufwand an das Übertragungsmedium "Funkkanal" angepaßt werden - beispielsweise durch Anpassung des die Schicht 1 (physical layer) des OSI-Referenzmodells repräsentierenden Bit-Transportsystems.

Vorteilhaft ist die einer dezentralen Breitband-Kommunikationseinrichtung zugeordnete Anschlußeinrichtung mit einer dezentralen, drahtlosen Übertragungseinrichtung verbunden. In der Anschlußeinrichtung sind Modulierungsmittel zur Umwandlung von zumindest einem übermittelten ATM-Datenstrom in ein analoges Signal angeordnet, wobei die Umwandlung in Abhängigkeit von der Übertragungsgeschwindigkeit des zumindes einen ATM-Datenstroms erfolgt. In der dezentralen, drahtlosen Übertragungseinrichtung sind Sendemittel zum Aussenden des analogen Signals bzw. des zumindest einen ATM-Datenstroms an die der zentralen Breitband-Kommunikationseinrichtung zugeordnete Basiseinrichtung angeordnet. Desweiteren sind in der Basiseinrichtung Demodulierungsmittel zur Umwandlung des empfangenen, analogen Signals in den zumindest einen entsprechenden ATM-Datenstrom angeordnet - Anspruch 2. Durch die Übermittlung von breitband-orientierten Datenströmen von den dezentralen Breitband-Kommunikationseinrichtungen an die zentrale Breitband-Kommunikationseinrichtung - "Upstream-Richtung" - über das Übertragungsmedium "Funkkanal" lassen sich insbesondere hochbitratige, interaktive, d.h. auf einen Rückkanal angewiesene Breitbanddienste - z.B. Internet-Zugänge und videobasierte Dienste sowie drahtlose LAN-Kommunikationsnetze realisieren. Auf die bisherige Nutzung des schmalbandigen Übertragunsmediums "Telefonleitung" - beispielsweise über eine ISDN-Verbindung als Rückkanal - kann somit verzichtet werden.

Um den Netzbetreibern eine einfache Netzplanung zu ermöglichen und um eine effektive Nutzung der Funkfrequenzbereiche zu erreichen, kommen Modulationsverfahren mit geringen Anforderungen an den Signal-Störabstand - SNR - für die Modulation der breitband-orientierten Datenströme bzw. Demodulation der empfangenen Signale zum Einsatz. Nach einer vorteilhaften Ausgestaltung ist das Modulationsverfahren und das Demodulationsverfahren durch eine Vierfach-Phasenumtastung - QPSK -, Anspruch 3 -, ggf. mit Überlagerungsempfang realisiert.

Nach einer weiteren vorteilhaften Ausgestaltung ist das Modulationsverfahren und das Demodulationsverfahren durch eine zweifach Amplitudenumtastung - ASK -, - Anspruch 4 -, (gegebenenfalls mit Geradeausempfang) oder durch eine Trellis-Code-Modulation - TCM - mit achtfach-Phasenumtastung - 8PSK - realisiert - Anspruch 5 -, wobei die Breitband-orientierten Datenströme mit einer maximalen Bitfehlerquote von 10⁻¹⁰ drahtlos übermittelt werden - Anspruch 7.

Um die Übertragungssicherheit und Störfestigkeit der übermittelten Breitband-orientierten Datenströme zu erhöhen, werden in der Basiseinrichtung bzw. in der Anschlußeinrichtung Redundanzdaten zur Vorwärtsfehlerkorrektur erzeugt und den an der Basiseinrichtung bzw. an der zumindest einen Anschlußeinrichtung eingehenden und drahtlos zu übermittelnden, Breitband-orientierten Datenströmen hinzugefügt. Auftretende "Bitfehler" in den drahtlos übermittelten, Breitband-orientierten Datenströmen werden mit Hilfe der Redundanzdaten korrigiert - Anspruch 8. Durch den Einsatz der Vorwärtsfehlerkorrektur wird beim Signal-Störabstand - SNR - eine Verbesserung um bis zu 5 dB erzielt, wodurch die Planung von Funknetzen weiter vereinfacht wird.

Vorteilhaft ist für die drahtlose Übertragung von Breitband-orientierten Datenströmen mit einer Bitrate von 155 Mbit/s ein Funksignal in einem Frequenzbereich zwischen 37 und 39,5 GHz vorgesehen - Anspruch 9. Die hierfür notwendigen Schaltungskomponenten sind als MMIC - Monolitic microwave integrated circuit - in Gallium-Arsenid- oder Indiumphosphid-Technologie bereits kommerziell verfügbar. Zudem können wegen der kurzen Wellenlängen von 8 mm besonders günstige, d.h. sehr kompakte Antennen realisiert werden.

Für die drahtlose Übermittlung von Breitband-orientierten Datenströmen an die zumindest eine dezentrale Breitband-Kommunikationseinrichtung sind Funksignale mit einer ersten Frequenz und für die drahtlose Übermittlung von Breitband-orientierten Datenströmen an die zentrale Breitband-Kommunikationseinrichtung Funksignale mit einer zweiten Frequenz vorgesehen - Anspruch 13. Dadurch wird auf vorteilhafte Weise auf dem Übertragungsmedium "Funkkanal" gleichzeitig ein Hin- und Rückkanal bereitgestellt, wodurch interaktive Multimedia-Dienste realisierbar sind.

Gemäß einer weiteren vorteilhaften Ausgestaltung der erfindungsgemäßen Kommunikationsanordnung werden von der zumindest einen dezentralen Breitband-Kommunikationseinrichtung an die zentrale Breitband-Kommunikationseinrichtung drahtlos zu übermittelnde Breitband-orientierte Datenströme gemäß einem TDMA-Zugriffsverfahren übertragen - Anspruch 16.

Vorteilhaft ist das Modulationsverfahren, das Demodulationsverfahren, die Frequenz der Funksignale, sowie die Sendeleistung und die Empfangsempfindlichkeit der Übertragungseinrichtung derart bestimmt, daß bei einer drahtlosen Übermittlung von Breitband-orientierten Datenströmen mit einer Bitfehlerquote von 10⁻¹⁰ eine maximale Reichweite von 500 Meter erreicht wird - Anspruch 17. Sowohl die der Basiseinrichtung als auch der Anschlußeinrichtung zugeordnete Übertragungseinrichtung sendet mit maximal 100 mW. Während die Basiseinrichtung kontinuierlich Funksignale sendet, sendet nur eine Teilnehmereinrichtung gleichzeitig Funksignale, wodurch im Teilnehmerzugangsbereich eine Funkleistung von 200 mW nicht überschritten wird.

Weitere vorteilhafte Ausgestaltungen des erfindungsgemäßen Verfahrens sind den weiteren Ansprüchen zu entnehmen.

Im folgenden wird ein Ausführungsbeispiel des erfindungsgemä-ßen Verfahrens anhand zweier Zeichnungen näher erläutert. Dabei zeigen
- FIG 1: in einem Blockschaltbild ein ein drahtloses Übertragungsmedium "Funkkanal" aufweisendes ATM-Kommunikationsnetz und
- FIG 2: die für das Aussenden und Empfangen von Daten notwendigen Sende- und Empfangseinheiten in einem ATM-Kommunikationsnetz gemäß FIG 1.

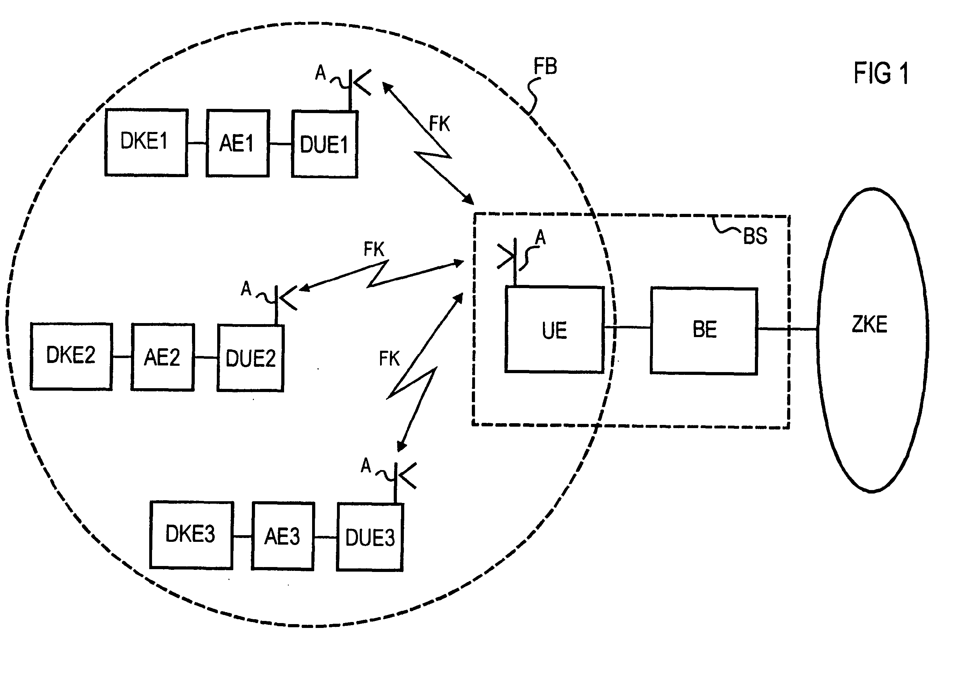

FIG 1 zeigt in einem Blockschaltbild ein ein drahtloses Übertragungsmedium "Funkkanal" aufweisendes, nach dem Asynchronen-Transfer-Modus - ATM - konzipiertes ATM-Kommunikationsnetz, über das mehrere Teilnehmereinrichtungen repräsentierende dezentrale ATM-Kommunikationsendeinrichtungen DKE1...3 mit einer zentralen Breitband-Kommunikationseinrichtung ZKE verbundenen sind. Die zentrale Breitband-Kommunikationseinrichtung ZKE stellt eine ATM-Vermittlungseinrichtung dar und ist mit einer Basiseinrichtung BE verbunden, an die eine drahtlose Übertragungseinrichtung UE angeschlossen ist. Die drahtlose Übertragungseinrichtung UE kann auch integraler Bestandteil der Basiseinrichtung BE sein. Die Basiseinrichtung BE und die drahtlose Übertagungseinrichtung UE bilden eine allgemein als Basisstation BS bezeichnete Einheit. Die Basisstation BS ist räumlich zentral in einem Funkbereich FB angeordnet, wobei den dezentralen ATM-Kommunikationsendeinrichtungen DKE1...3 zugeordnete dezentrale drahtlose Übertragungseinrichtungen DUE1...3 Sichtverbindung zur Übertragungseinrichtung UE der Basisstation BS haben. Die Basisstation BS kann beispielsweise in einer Beleuchtungseinrichtung einer öffentlichen Straße integriert sein.

Jede dezentrale ATM-Kommunikationsendeinrichtung DKE1...3 ist jeweils mit einer Anschlußeinrichtung AE1...3 verbunden, an die eine drahtlose Übertragungseinrichtung DUE1...3 angeschlossen ist. Die drahtlose Übertragungseinrichtung DUE1...3 kann Bestandteil der Anschlußeinrichtung AE1...3 sein. Die Antennen A der den Anschlußeinheiten AE1...3 zugeordneten drahtlosen Übertragungseinrichtungen DUE1...3 weisen eine starke Richtwirkung auf und sind auf die Basisstation BS ausgerichtet und derart dimensioniert, daß eine Entfernung der Übertragungseinrichtungen DUE1...3 und der Basisstation BS bis zu 500 m erreicht wird.

In diesem Ausführungsbeispiel repräsentiert das drahtlose ATM-Kommunikationsnetz ein auf der ATM-Übertragungstechnologie basierendes Fernsehverteilnetz, welches unter anderem beispielsweise den interaktiven Breitband-Dienst "Video-on-Demand" bereitstellt. Von der eine ATM-Vermittlungseinrichtung repräsentierenden, zentralen Breitband-Kommunikationseinrichtung ZKE an die Basisstation BS übermittelte Daten - z.B. Video- oder Multimedia-Daten - bzw. aus ATM-Zellen bestehende ATM-Datenströme, werden in der Basiseinrichtung BE für eine Punkt-zu-Mehrpunkt-Übertragung aufbereitet, anschließend in der drahtlosen Übertragungseinrichtung UE in das Übertragungsmedium "Funkkanal" FK repräsentierende Funksignale umgesetzt und an die einzelnen dezentralen Übertragungseinrichtungen DUE1...3 - in der als "Downstream" bezeichneten Richtung - übermittelt. Von der Basisstation BS bzw. von der drahtlosen Übertragungseinrichtung UE werden über den Funkkanal FK kontinuierlich ATM-Zellen mit einer ersten Frequenz und einer Bitrate von 155,52 MBit/s ausgesendet und in den, den dezentralen ATM-Kommunikationsendeinrichtungen DKE1...3 zugeordneten Übertragungseinrichtungen DUE1...3 empfangen. Die Übertragungsrate von 155,52 MBit/s entspricht einer Übertragungskapazität von 80 nach dem Komprimierungs-Standard MPEG1 codierten Fernsehkanälen in Videoqualität. Auf der Teilnehmerseite werden in den Anschlußeinrichtungen AE1...3 die für die jeweilige ATM-Kommunikationsendeinrichtung DKE1...3 relevanten Daten bzw. ATM-Zellen durch Auswertung der in den Köpfen der ATM-Zellen enthaltenen Informationen selektiert. Der Schutz persönlicher Daten, die durch den Mehrfachzugriff zumindest physikalisch allen Teilnehmern gleichermaßen zur Verfügung stehen, ist dabei ebenso wie beim Mobilfunk gewährleistet. Die dezentralen ATM-Kommunikationsendeinrichtungen DKE1...3 repräsentieren in diesem Ausführungsbeispiel jeweils eine ATM-Set-Top-Box, mittels der die in der Anschlußeinrichtung AE1...3 selektierten ATM-Zellen in Video- oder TV-Signale bzw. die für die Auswahl oder Anforderung von TV-Daten - z.B. Fernsehkanälen - notwendigen Steuersignale in ATM-Zellen umgewandelt werden. Die Datenübertragung von der ATM-Kommunikationsendeinrichtung DKE1...3 zur Basisstation BS - in der als "Upstream" bezeichneten Richtung - findet auf einer zweiten Frequenz - beispielsweise einer zugeordneten Nachbarfrequenz - statt. Gemäß einem TDMA-Zugriffsverfahren übertragen die einzelnen ATM-Kommunikationsendeinrichtungen DKE1...3 die zu übermittelnden Daten bzw. ATM-Zellen in vorher von der Basisstation BS zugewiesenen Zeitschlitzen. Es kann nie mehr als eine ATM-Kommunikationsendeinrichtung DKE1...3 gleichzeitig senden. Bei dem beschriebenen drahtlosen Kommunikationsnetz können bis zu 128 ATM-Kommunikationsendeinrichtungen DKE1...3 an die Basisstation BS angeschlossen werden, wobei die Gesamt-Übertragungskapazität von 155 MBit/s je nach Anforderung auf die ATM-Kommunikationsendeinrichtungen DKE1...3 verteilt wird. Einer ATM-Kommunikationsendeinrichtung DKE1...3 kann bis zu 50 MBit/s an Übertragungskapazität zur Verfügung gestellt werden.

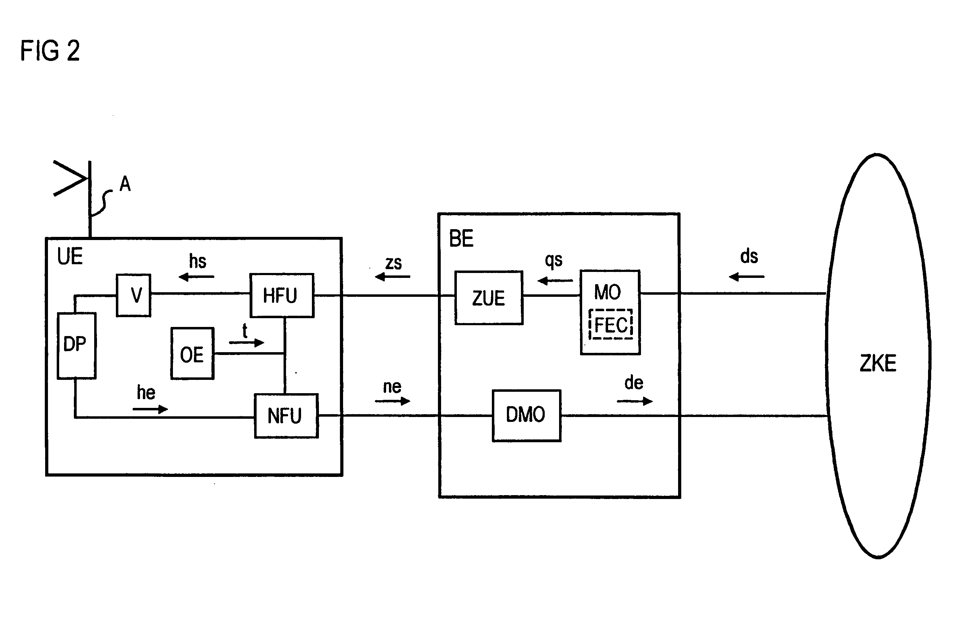

Die Basiseinrichtung BE und die zugeordnete drahtlose Übertragungseinrichtung UE sowie die auf der Teilnehmerseite angeordneten Anschluß- und Übertragungseinrichtungen AE1...3, DUE1...3 sind im wesentlichen identisch aufgebaut. Im folgenden wird anhand der in der Basisstation BS angeordneten Sende- und Empfangseinheiten stellvertretend für alle Anschluß- und Übertragungseinheiten AE1...3, DUE1...3 das Aussenden und Empfangen von Breitband-orientierten Datenströmen näher erläutert - siehe hierzu FIG 2:

Ein von der zentralen ATM-Vermittlungseinrichtung ZKE an die Basiseinrichtung BE übermittelter ATM-Datenstrom ds wird an eine Modulatoreinheit MO herangeführt, wobei der von der zentralen ATM-Vermittlungseinrichtung ZKE ausgesendete ATM-Datenstrom zuvor in einer nicht dargestellten Zelltransporteinheit für eine Punkt-zu-Mehrpunkt-Übertragung aufbereitet wird. Der aufbereitete ATM-Datenstrom wird durch ein in der Modulatoreinheit MO realisiertes Modulationsverfahren - z.B. 4-fach-Phasenumtastung QPSK - in ein für die Umwandlung in Funksignale geeignetes analoges Signal umgewandelt. Das QPSKmodulierte Signal - im folgenden als Sendesignal qs bezeichnet - wird anschließend in einer Zwischenfrequenz-Umsetzereinheit ZUE auf eine Zwischenfrequenz umgesetzt, um den richtigen Duplexabstand zwischen Sende- und Empfangsfrequenz einzustellen. Der Duplexabstand bzw. die Frequenzdifferenz ist genormt und ist bei dem im Ausführungsbeispiel beschriebenen System auf 1,26 GHz eingestellt. Das umgesetzte Sendesignal zs wird an die Übertragungseinrichtung UE weitergeleitet und mittels einer dort angeordneten Hochfrequenz-Umsetzereinheit HFU in das Hochfrequenzband gemischt, d.h. in ein hochfrequentes Sendesignal hs umgewandelt. Hierzu wird ein in einer Oszillatoreinheit OE gebildetes Trägersignal t an die Hochfrequenz-Umsetzereinheit HFU übertragen. Aus wirtschaftlichen Gründen kann die Oszillatoreinheit OE beispielsweise gemäß dem Ein-Oszillator-Konzept konzipiert und durch einen Lokaloszillator realisiert sein. Das hochfrequente Sendesignal hs wird durch eine in der Übertragungseinrichtung UE angeordnete Verstärkereinheit V - z.B. Leistungsverstärker - auf eine Leistung von maximal 20 dBm (100 mW) verstärkt, einer Sende- und Empfangsweiche bzw. Frequenzweiche DP - auch als Duplexer bezeichnet - zugeführt und über eine Antenne A an die ATM-Kommunikationsendeinrichtungen DKE1...3 gesendet. Für die Basisstation BS wird beispielsweise ein schwach bündelnder Hornstrahler als Antenne A eingesetzt. Die auf der Teilnehmerseite angeordneten Übertragungseinrichtungen DUE1...3 sind mit Parabolspiegel mit starker Bündelung ausgestattet. Der in den Übertragungseinrichtungen UE, DUE1...3 ablaufende Sende- und Empfangsbetrieb wird über die selbe Antenne A geführt. Die Sende- und Empfangssignale hs, he werden durch die in der Übertragungseinrichtung UE angeordnete Frequenzweiche DP getrennt. Ein empfangenes hochfrequentes Signal he wird einem optionalen, rauscharmen Vorverstärker - nicht dargestellt - zugeführt, dort verstärkt und durch eine Umwandlungseinheit NFU in ein analoges, niederfrequentes Signal ne umgewandelt. Das niederfrequente Signal ne wird an die Basiseinrichtung BE weitergeleitet und dort nach einer weiteren Verstärkung in einer Verstärkereinheit - nicht dargestellt - einer Demodulatoreinheit DMO zugeführt, wobei das niederfrequente und beispielsweise mit Hilfe der Amplitudenumtastung ASK modulierte Signal ne demoduliert und in einen Breitband-orientierten Datenstrom de umgewandelt wird. Der empfangene Breitband-orientierte Datenstrom wird anschließend über die Zelltransporteinheit an die zentrale ATM-Vermittlungseinrichtung ZKE weitergeleitet.

Für die Auswahl des für die Funksignale geeigneten Frequenzbandes sowie die Auswahl geeigneter Modulationsverfahren bei der Realisierung von drahtlosen Kommunikationsnetzen stellen die kostengünstige Verfügbarkeit bei einfacher Planbarkeit der zugehörigen Funknetze die wesentlichen Kriterien dar.

Bei der Auswahl eines geeigneten Frequenzbandes sind die Frequenzbelegungspläne internationaler Organisationen - insbesondere durch CEPT - zu berücksichtigen. Für das im Ausführungsbeispiel beschriebene drahtlose ATM-Kommunikationsnetz sind Bandbreiten erforderlich, die in GSM-, DECT- und CDMA-Systemen mit niedrigen Frequenzen nicht realisierbar sind, so daß nur eine Übertragung mit höheren Frequenzen in Frage kommt. Von CEPT sind für terrestrische feste Systeme die Frequenzbereiche 22, 0...29, 5 GHz, 37, 0...39, 5 GHz, 40, 5...42, 5 GHz (multipoint video distribution) und 54,25...66,0 GHz vorgesehen. Aus wirtschaftlichen Gründen hat sich für Systeme, die in relativ hohen Stückzahlen produziert werden, ein möglichst niedriger Frequenzbereich als günstig erwiesen. Da für den Frequenzbereich um 38 GHz bereits die wichtigen Komponenten als MMIC's - monolithic microwave integrated circuits - in Galliumarsenid- oder Indiumphosphid-Technologie kommerziell verfügbar sind, wurde für das im Ausführungsbeispiel beschriebene drahtlose ATM-Kommunikationsnetz der Frequenzbereich von 37,0 bis 39,5 GHz ausgewählt. Bei diesem Frequenzbereich mit Wellenlängen von8 mm können die Antennen A günstigerweise sehr kompakt realisiert werden. So sind beispielsweise Teilnehmerantennen in der Größe einer Glühlampe der Kategorie 150W-Strahler realisierbar. Diese Antennen A können im Gegensatz zu den für den Empfang von Satelliten-TV ausgelegten Parabolspiegeln unauffällig in das Straßenbild eingefügt werden. In naher Zukunft sind auch für den 60 GHz Frequenzbereich alle wichtigen Komponenten als MMIC's kommerziell verfügbar. Geringere Anforderungen an die Technologie stellt der Frequenzbereich zwischen 22,0 bis 29,5 GHz dar, welcher jedoch augenblicklich in wenigen Ländern nutzbar ist.

Die Anforderungen, den Betreibern von drahtlosen Kommunikationsnetzen eine einfache Netzplanung und eine effektive Ressourcen-Nutzung bezüglich der Funkfrequenzen zu ermöglichen, bestimmen wesentlich die Auswahl des Modulationsverfahrens. Insbesondere ist ein störunanfälliges Modulationsverfahren anzuwenden, welches zusätzlich spektral möglichst effizient ist. Hinsichtlich dieser Anforderungen wird beim beschriebenen drahtlosen Kommunikationsnetz in downstream-Richtung das QPSK-Modulationsverfahren mit Überlagerungsempfang vorgeschlagen. Das QPSK-Modulationsverfahren stellt geringe Anforderungen an den Signal-Störabstand SNR. Der Einsatz eines Überlagerungsempfangs-Verfahrens wirkt sich vorteilhaft auf die Störfestigkeit der Datenübertragung aus. In upstream-Richtung ist die zweistufige ASK mit Geradeausempfang als Modulationsverfahren vorteilhaft. Der Geradeausempfang ermöglicht eine kurze Synchronisationszeit auf den Takt der einzelnen Datenströme, da im Gegensatz zum Überlagerungsempfang keine vorherige Synchronisation auf den Takt der Trägerfrequenz erforderlich ist. Um die Störfestigkeit der drahtlosen Übertragung weiter zu erhöhen, kann beim Modulationsverfahren zusätzlich eine Vorwärtsfehlerkorrektur FEC eingesetzt werden - durch strichlierte Linien angedeutet. So ist beispielsweise mit einem Blockcode, der die Korrektur von bis zu 8 Fehlern je ATM-Zelle ermöglicht, eine Verbesserung des Signal-Störabstandes SNR um bis zu 5 dB erreichbar.

Netzbetreibern steht mit dem im Ausführungsbeispiel beschriebenen, breitbandigen Funkanschluß bzw. Funkkanal FK in einem ATM-Kommunikationsnetz ein kostengünstiger Anschluß von ATM-Kommunikationsendeinrichtungen DKE1...3 an ein ATM-Kommunikationsnetz zur Verfügung. Der Funkanschluß ist zusätzlich in kurzer Zeit realisierbar, da der Aufwand bzw. Zeitbedarf für das Verlegen von Kabeln und Leitungen entfällt.

## Patentansprüche

1. Kommunikationsanordnung zum Übermitteln von Breitband-orientierten Datenstömen zwischen einer zentralen Breitband-Kommunikationseinrichtung (ZKE) und zumindest einer dezentralen Breitband-Kommunikationseinrichtung (DKE1...3),
- mit zumindest einer mit der zentralen Breitband-Kommunikationseinrichtung(ZKE) verbundenen Basiseinrichtung (BE)
- mit einer der Basiseinrichtung (BE) zugeordneten, drahtlosen Übertragungseinrichtung (UE) zur drahtlosen Übermittlung der breitband-orientierten Datenströme
- mit zumindest einer der zumindest einen dezentralen Breitband-Kommunikationseinrichtung (DKE1...3) zugeordneten Anschlußeinrichtung (AE1...3) zum Empfangen der drahtlos übermittelten, breitband-orientierten Datenströme,
**dadurch gekennzeichnet,**
- **daß** in der Basiseinrichtung (BE) Mittel zur Aufbereitung von übermittelten, nach dem Asynchronen Transfer Modus ATM konzipierten ATM-Datenströmen für eine Punkt-zu-Mehrpunkt-Übertragung vorgesehen sind,
- **daß** die Basiseinrichtung (BE) Modulierungsmittel zur Umwandlung der aufbereiteten ATM-Datenströme in ein analoges Signal aufweist, wobei die Umwandlung in Abhängigkeit der Übertragungsgeschwindigkeit der aufbereiteten ATM-Datenströme erfolgt,
- **daß** die drahtlose Übertragungseinrichtung (UE) Sendemittel zum kontinuierlichen Aussenden des analogen Signals bzw. der aufbereiteten ATM-Datenströme an die zumindest eine Anschlußeinrichtung (AE1...3) aufweist,
- **daß** in der Anschlußeinrichtung (AE1...3) Demodulierungsmittel zur Umwandlung des empfangenen, analogen Signals in entsprechende ATM-Datenströme angeordnet sind.

2. Kommunikationsanordnung nach Anspruch 1,
**dadurch gekennzeichnet,**
- **daß** die einer dezentralen Breitband-Kommunikationseinrichtung (DKE1...3) zugeordnete Anschlußeinrichtung (AE1...3) mit einer dezentralen, drahtlosen Übertragungseinrichtung (DUE1...3) verbunden ist,
- **daß** in der Anschlußeinrichtung (AE1...3) Modulierungsmittel zur Umwandlung von zumindest einem übermittelten ATM-Datenstrom in ein analoges Signal angeordnet sind, wobei die Umwandlung in Abhängigkeit von der Übertragungsgeschwindigkeit des zumindest einen ATM-Datenstroms erfolgt,
- **daß** in der dezentralen, drahtlosen Übertragungseinrichtung (DUE1...3) Sendemittel zum Aussenden des analogen Signals bzw. des zumindest einen ATM-Datenstroms an die der zentralen Breitband-Kommunikationseinrichtung (ZKE) zugeordnete Basiseinrichtung (BE) angeordnet sind, und
- **daß** in der Basiseinrichtung (BE) Demodulierungsmittel zur Umwandlung des empfangenen, analogen Signals in den zumindest einen entsprechenden ATM-Datenstrom angeordnet sind.

3. Kommunikationsanordnung nach Anspruch 1 oder 2,
**dadurch gekennzeichnet,**
**daß** durch die Modulierungsmittel und die Demodulierungsmittel eine vierfach-Phasenumtastung QPSK realisiert ist.

4. Kommunikationsanordnung nach einem der vorherigen Ansprüche,
**dadurch gekennzeichnet,**
**daß** durch die Modulierungsmittel und die Demodulierungsmittel eine zweifach-Amplitudenumtastung ASK realisiert ist.

5. Kommunikationsanordnung nach einem der vorherigen Ansprüche,
**dadurch gekennzeichnet,**
**daß** durch die Modulierungsmittel und die Demodulierungsmittel eine Trellis-Code-Modulation TCM mit achtfach-Phasenumtastung 8PSK realisiert ist.

6. Kommunikationsanordnung nach einem der Ansprüche 2 bis 5,
**dadurch gekennzeichnet,**
- **daß** in der Basiseinrichtung (BE)
-- durch die Modulierungsmittel eine vierfach-Phasenumtastung QPSK, und
-- durch die Demodulierungsmittel eine zweifach-Amplitudenumtastung ASK realisiert ist, und
- **daß** in der Anschlußeinrichtung (AE1...3)
-- durch die Modulierungsmittel eine zweifach-Amplitudenumtastung ASK und
-- durch die Demodulierungsmittel eine vierfach-Phasenumtastung QPSK realisiert ist.

7. Kommunikationsanordnung nach einem der vorherigen Ansprüche,
**dadurch gekennzeichnet,**
**daß** die in der Kommunikationsanordnung angeordneten Mittel derart ausgestaltet sind, daß die ATM-Datenströme mit einer maximalen Bitfehlerrate von 10⁻¹⁰ drahtlos übermittelt werden.

8. Kommunikationsanordnung nach einem der vorherigen Ansprüche,
**dadurch gekennzeichnet,**
**daß** in der Basiseinrichtung (BE) bzw. Anschlußeinrichtung (AE1...3)
- Mittel zur Erzeugung und zur Einfügung von Redundanzdaten zur Vorwärtsfehlerkorrektur vorgesehen sind, wobei die erzeugten Redundanzdaten den drahtlos zu übermittelnden ATM-Datenströmen hinzugefügt werden, und
- Korrekturmittel zur Erkennung und Korrektur von bei den drahtlos übermittelten ATM-Datenströmen auftretenden Bitfehlern mit Hilfe der Redundanzdaten
angeordnet sind.

9. Kommunikationsanordnung nach einem der vorherigen Ansprüche,
**dadurch gekennzeichnet,**
**daß** die in den drahtlosen Übertragungseinrichtungen (UE, DUE1...3) angeordneten Sendemittel derart ausgestaltet sind, daß zu übermittelnde ATM-Datenströme mit einer Bitrate von 155 MBit/s mit Hilfe eines analogen Funksignals in einem Frequenzbereich zwischen 37,0 und 39,5 GHz gesendet werden.

10. Kommunikationsanordnung nach einem der vorherigen Ansprüche
**dadurch gekennzeichnet,**
**daß** die in den drahtlosen Übertragungseinrichtungen (UE, DUE1...3) angeordneten Sendemittel derart ausgestaltet sind, daß zu übermittelnde ATM-Datenströme mit einer Bitrate von 155 MBit/s mit Hilfe eines analogen Funksignals in einem Frequenzbereich zwischen 22 und 29,5 GHz gesendet werden.

11. Kommunikationsanordnung nach einem der vorherigen Ansprüche
**dadurch gekennzeichnet,**
**daß** die in den drahtlosen Übertragungseinrichtungen (UE, DUE1...3) angeordneten Sendemittel derart ausgestaltet sind, daß zu übermittelnde ATM-Datenströme mit einer Bitrate von 155 MBit/s mit Hilfe eines analogen Funksignals in einem Frequenzbereich zwischen 40 und 42,5 GHz gesendet werden.

12. Kommunikationsanordnung nach einem der vorherigen Ansprüche,
**dadurch gekennzeichnet,**
**daß** die in den drahtlosen Übertragungseinrichtungen (UE, DUE1...3) angeordneten Sendemittel derart ausgestaltet sind, daß zu übermittelnde ATM-Datenströme mit einer Bitrate von 155 MBit/s mit Hilfe eines analogen Funksignals in einem Frequenzbereich zwischen 54,25 und 66,0 GHz gesendet werden.

13. Kommunikationsanordnung nach einen der Ansprüche 2 bis 12,
**dadurch gekennzeichnet,**
**daß** die in den drahtlosen Übertragungseinrichtungen (UE, DUE1...3) angeordneten Sendemittel derart ausgestaltet sind,
- **daß** für die drahtlose Übermittlung von ATM-Datenströmen an die zumindest eine dezentrale Breitband-Kommunikationseinrichtung (DKE1...3) Funksignale mit einer ersten Frequenz und
- **daß** für die drahtlose Übermittlung von ATM-Datenströmen an die zentrale Breitband-Kommunikationseinrichtung(ZKE) Funksignale mit einer zweiten Frequenz vorgesehen sind.

14. Kommunikationsanorndung nach einem der vorherigen Ansprüche,
**dadurch gekennzeichnet,**
- **daß** die zentrale Breitband-Kommunikationseinrichtung(ZKE) ein ATM-Kommunikationsnetz und
- **daß** die zumindest eine dezentrale Breitband-Kommunikationseinrichtung(DKE1...3) ein ATM-Kommunikationsendgerät repräsentieren.

15. Kommunikationsanordnung nach einen der vorherigen Ansprüche,
**dadurch gekennzeichnet,**
- **daß** die zentrale Breitband-Kommunikationseinrichtung (ZKE) ein nach dem ATM orientiertes Video- bzw. TV-Verteilnetz und
- **daß** die zumindest eine dezentrale Breitband-Kommunikationseinrichtung (DKE1...3) eine ATM-Set-Top-Box repräsentiert, wobei mit Hilfe der ATM-Set-Top-Box
-- die drahtlos übermittelten, ÄTM-Datenströme in Video- bzw. TV-Signale umgewandelt und
-- die für die Auswahl bzw. Anforderung der Video- bzw. TV-Signale erforderlichen Steuersignale in ATM-Datenströme umgewandelt werden.

16. Kommunikationsanorndung nach einen der Ansprüche 2 bis 15,
**dadurch gekennzeichnet,**
**daß** die in den dezentralen, drahtlosen Übertragungseinrichtungen (DUE1...3) angeordneten Sendemittel derart ausgestaltet sind, daß die von der zumindest einen dezentralen Breitband-Kommunikationseinrichtung (DKE1...3) an die zentrale Breitband-Kommunikationseinrichtung (ZKE) drahtlos zu übermittelnden ATM-Datenströme gemäß einem TDMA-Zugriffsverfahren übertragen werden.

17. Kommunikationsanordnung nach einem der vorherigen Ansprüche,
**dadurch gekennzeichnet,**
**daß** die in der Kommunikationsanordung angeordneten Modulierungs-, Demodulierungs- und Sendemittel derart ausgestaltet sind, daß bei einer drahtlosen Übermittlung von ATM-Datenströmen mit einer Bitfehlerrate von 10⁻¹⁰ eine maximale Reichweite von 500 Meter erreicht wird.

## Claims

1. Communication system for transmitting broadband-oriented data streams between a central broadband communication device (ZKE) and at least one local broadband communication device (DKE1...3),
- with at least one base unit (BE) connected to the central broadband communication device (ZKE)
- with a wireless transmission device (UE) assigned to the base unit (BE) for wireless transfer of the broadband-oriented data streams
- with at least one access device (AE1...3) assigned to the decentralized broadband communication device (DKE1...3) for receiving the wirelessly transmitted, broadband-oriented data streams,
**characterized in that**
- in the base unit (BE) means are provided for editing transmitted ATM data streams designed in accordance with the Asynchronous Transfer Mode ATM for a point-to multipoint transmission,
- the base unit (BE) features modulation means for converting the edited ATM data streams into an analogue signal, with the conversion depending on the transmission speed of the edited ATM data streams,
- the wireless transmission device (UE) features send means for continuously sending out the analogue signals or the edited ATM data streams to the at least one access device (AE1...3),
- in the access device (AE1...3) demodulation means are arranged for converting the received, analogue signals into corresponding ATM data streams.

2. Communication system in accordance with claim 1,
**characterized in that**
- the access device (AE1...3) assigned to a decentralized broadband communication device (DKE1...3) is connected to a decentralized wireless transmission device (DUE1...3),
- in the access device (AE1...3) modulation means are arranged for converting at least one transferred ATM data stream into an analogue signal, with the conversion being undertaken depending on the transmission speed of the at least one ATM data stream,
- send means for sending out the analogue signal of the at least one ATM data stream to the base unit (BE) assigned to the central broadband communication device (ZKE) are provided in the local wireless transmission device (DUE1...3).
- demodulation means are arranged in the base unit (BE) for converting the received, analogue signals into the at least one corresponding ATM data stream.

3. Communication system in accordance with claim 1 or 2,
**characterized in that**
a four-fold quadrature phase shift keying QPSK is realized by the modulation means and the demodulation means.

4. Communication system in accordance with one of the previous claims,
**characterized in that**
a two-fold amplitude shift keying ASK is realized by the modulation means and the demodulation means.

5. Communication system in accordance with one of the previous claims,
**characterized in that**
a Trellis Code Modulation TCM with 8-fold shift keying 8PSK is realized by the modulation means and the demodulation means.

6. Communication arrangement in accordance with one of the claims 2 to 5, **characterized in that**
- in the base unit (BE)
-- a four-fold phase shift key QPSK is realized by the modulation means and
-- a two-fold amplitude shift keying ASK is realized by the demodulation means, and
- in the access device (AE1...3)
-- a two-fold amplitude shift keying ASK is realized by the modulation means, and
a four-fold quadrature phase shift keying QPSK is realized by the demodulation means.

7. Communication system in accordance with one of the previous claims,
**characterized in that**
the means arranged in the communication system are designed so that the ATM data streams are transferred wirelessly at a maximum bit error rate of 10-10.

8. Communication system in accordance with one of the previous claims,
**characterized in that**
in the base unit (BE) or access unit (AE1...3)
- means for generating and inserting redundancy data for forwards error correction are provided, with the redundancy data generated being inserted into the ATM data streams for wireless transmission, and
- correction means are arranged for detection and correction of bit errors arising in the wireless transmission of ATM data streams with the aid of the redundancy data

9. Communication system in accordance with one of the previous claims,
**characterized in that**
send means arranged in the wireless transmission devices (UE, DUE1...3) are designed so that ATM data streams to be transmitted are sent at a bit rate of 155 MBit/s with the aid of an analogue radio signal in a frequency range between 37.0 and 39.5 GHz.

10. Communication system in accordance with one of the previous claims
**characterized in that**
send means arranged in the wireless transmission devices (UE, DUE1...3) are designed so that ATM data streams to be transmitted are sent at a bit rate of 155 MBit/s with the aid of an analogue radio signal in a frequency range between 22 and 29.5 GHz.

11. Communication system in accordance with one of the previous claims
**characterized in that**
send means arranged in the wireless transmission devices (UE, DUE1...3) are designed so that ATM data streams to be transmitted are sent at a bit rate of 155 MBit/s with the aid of an analogue radio signal in a frequency range between 40 and 42.5 GHz.

12. Communication system in accordance with one of the previous claims,
**characterized in that**
send means arranged in the wireless transmission devices (UE, DUE1...3) are designed so that ATM data streams to be transmitted are sent at a bit rate of 155 MBit/s with the aid of an analogue radio signal in a frequency range between 54.25 and 66.0 GHz.

13. Communication arrangement in accordance with one of the claims 2 to 12,
**characterized in that** the send means arranged in the wireless transmission devices (UE, DUE1...3) are designed so that,
- radio signals with a first frequency are provided for the wireless transfer of ATM data streams to the at least one local broadband communication device (DKE1...3), and
- radio signals with a second frequency are provided for the wireless transfer of ATM data streams to the central broadband communication device (ZKE)

14. Communication arrangement in accordance with one of the previous claims,
**characterized in that**
- the central broadband communication device (ZKE) represents an ATM communication network and
- the at least one local broadband communication device (DKE1...3) represents an ATM communication terminal.

15. Communication arrangement in accordance with one of the previous claims,
**characterized in that**
- the central broadband communication device (ZKE) represents a video or TV distribution network oriented according to ATM, and
- the at least one local broadband communication device (DKE1...3) represents an ATM set-top box, whereby, with the aid of the ATM set-top box
-- the wirelessly transmitted ATM data streams are converted into video or TV signals, and
-- the control signals necessary for selecting or requesting the video or TV signals are converted into ATM data streams.

16. Communication arrangement in accordance with one of the claims 2 to 15,
**characterized in that**
the send means arranged in the decentralized, wireless transmission devices (DUE1...3) are designed so that the ATM data streams to be transferred by the at least one decentralized broadband communication device (DKE1...3) to the central broadband communication device (ZKE) are transmitted in accordance with a TDMA access method.

17. Communication arrangement in accordance with one of the previous claims,
**characterized in that**
the modulation/demodulation and send means arranged in the communication arrangement are designed so that, for a wireless transfer of ATM data streams with a bit error rate of 10-10 a maximum range of 500 meters is achieved.

## Revendications

1. Système de communication pour transmettre des flux de données orientés large bande entre un dispositif de communication à large bande centralisé (ZKE) et au moins un dispositif de communication à large bande décentralisé (DKE1...3),
- avec au moins un dispositif de base (BE) relié au dispositif de communication à large bande centralisé (ZKE),
- avec un dispositif de transmission sans fil (UE) associé au dispositif de base (BE) pour la transmission sans fil des flux de données orientés large bande,
- avec au moins un dispositif de raccordement (AE1...3) associé à l'au moins un dispositif de communication à large bande décentralisé (DKE1...3) pour recevoir les flux de données orientés large bande transmis sans fil,
**caractérisé en ce que**
- des moyens sont prévus dans le dispositif de base (BE) pour préparer des flux de données ATM transmis et conçus selon le mode de transfert asynchrone ATM en vue d'une transmission point à multipoints,
- le dispositif de base (BE) présente des moyens de modulation pour convertir les flux de données ATM préparés en un signal analogique, la conversion se faisant en fonction de la vitesse de transmission des flux de données ATM préparés,
- le dispositif de transmission sans fil (UE) présente des moyens d'émission pour émettre en continu le signal analogique ou les flux de données ATM préparés audit au moins un dispositif de raccordement (AE1...3),
- des moyens de démodulation sont placés dans le dispositif de raccordement (AE1...3) pour convertir le signal analogique reçu en flux de données ATM correspondants.

2. Système de communication selon la revendication 1,
**caractérisé en ce que**
- le dispositif de raccordement (AE1...3) associé à un dispositif de communication à large bande décentralisé (DKE1...3) est relié à un dispositif de transmission sans fil décentralisé (DUE1...3),
- des moyens de modulation sont placés dans le dispositif de raccordement (AE1...3) pour convertir au moins un flux de données ATM transmis en un signal analogique, la conversion se faisant en fonction de la vitesse de transmission dudit au moins un flux de données ATM,
- des moyens d'émission sont placés dans le dispositif de transmission sans fil décentralisé (DUE1...3) pour émettre le signal analogique resp. l'au moins un flux de données ATM au dispositif de base (BE) associé au dispositif de communication à large bande centralisé (ZKE), et
- des moyens de démodulation sont placés dans le dispositif de base (BE) pour convertir le signal analogique reçu en ledit au moins un flux de données ATM correspondant.

3. Système de communication selon la revendication 1 ou 2,
**caractérisé en ce que**
une modulation à quatre états de phase QPSK est réalisée par les moyens de modulation et les moyens de démodulation.

4. Système de communication selon l'une des revendications précédentes,
**caractérisé en ce que**
une modulation à deux niveaux d'amplitude ASK est réalisée par les moyens de modulation et les moyens de démodulation.

5. Système de communication selon l'une des revendications précédentes,
**caractérisé en ce que**
une modulation codée en treillis TCM à modulation à huit états de phase 8PSK est réalisée par les moyens de modulation et les moyens de démodulation.

6. Système de communication selon l'une des revendications 2 à 5,
**caractérisé en ce que**
- dans le dispositif de base (BE)
- une modulation à quatre états de phase QPSK est réalisée par les moyens de modulation et
-- une modulation à deux niveaux d'amplitude ASK est réalisée par les moyens de démodulation, et
- que dans le dispositif de raccordement (AE1...3)
-- une modulation à deux niveaux d'amplitude ASK est réalisée par les moyens de modulation et
-- une modulation à quatre états de phase QPSK est réalisée par les moyens de démodulation.

7. Système de communication selon l'une des revendications précédentes,
**caractérisé en ce que**
les moyens placés dans le système de communication sont configurés de telle manière que les flux de données ATM sont transmis sans fil avec un taux maximal d'erreurs sur les bits de 10⁻¹⁰.

8. Système de communication selon l'une des revendications précédentes,
**caractérisé en ce que**
dans le dispositif de base (BE) ou le dispositif de raccordement (AE1...3)
- des moyens de génération et d'insertion de données redondantes sont prévus en vue du contrôle d'erreurs vers l'avant, les données redondantes générées étant ajoutées aux flux de données ATM à transmettre sans fil, et
- des moyens de correction y sont placés pour détecter et corriger à l'aide des données redondantes des erreurs sur les bits survenant dans les flux de données ATM transmis sans fil.

9. Système de communication selon l'une des revendications précédentes,
**caractérisé en ce que**
les moyens d'émission placés dans les dispositifs de transmission sans fil (UE, DUE1...3) sont configurés de telle manière que des flux de données ATM à transmettre sont émis avec un débit binaire de 155 Mbit/s à l'aide d'un signal radio analogique dans une gamme de fréquences comprises entre 37,0 et 39,5 GHz.

10. Système de communication selon l'une des revendications précédentes,
**caractérisé en ce que**
les moyens d'émission placés dans les dispositifs de transmission sans fil (UE, DUE1...3) sont configurés de telle manière que des flux de données ATM à transmettre sont émis avec un débit binaire de 155 Mbit/s à l'aide d'un signal radio analogique dans une gamme de fréquences comprises entre 22 et 29,5 GHz.

11. Système de communication selon l'une des revendications précédentes,
**caractérisé en ce que**
les moyens d'émission placés dans les dispositifs de transmission sans fil (UE, DUE1...3) sont configurés de telle manière que des flux de données ATM à transmettre sont émis avec un débit binaire de 155 Mbit/s à l'aide d'un signal radio analogique dans une gamme de fréquences comprises entre 40 et 42,5 GHz.

12. Système de communication selon l'une des revendications précédentes,
**caractérisé en ce que**
les moyens d'émission placés dans les dispositifs de transmission sans fil (UE, DUE1...3) sont configurés de telle manière que des flux de données ATM à transmettre sont émis avec un débit binaire de 155 Mbit/s à l'aide d'un signal radio analogique dans une gamme de fréquences comprises entre 54,25 et 66,0 GHz.

13. Système de communication selon l'une des revendications 2 à 12,
**caractérisé en ce que**
les moyens d'émission placés dans les dispositifs de transmission sans fil (UE, DUE1...3) sont configurés de telle manière
- que pour la transmission sans fil de flux de données ATM audit au moins un dispositif de communication à large bande décentralisé (DKE1...3) des signaux radio avec une première fréquence sont prévus et
- que pour la transmission sans fil de flux de données ATM au dispositif de communication à large bande centralisé (ZKE) des signaux radio avec une deuxième fréquence sont prévus.

14. Système de communication selon l'une des revendications précédentes,
**caractérisé en ce que**
- le dispositif de communication à large bande centralisé (ZKE) représente un réseau de communication ATM et
- que ledit au moins un dispositif de communication à large bande décentralisé (DKE1...3) représente un terminal de communication ATM.

15. Système de communication selon l'une des revendications précédentes,
**caractérisé en ce que**
- le dispositif de communication à large bande centralisé (ZKE) représente un réseau de diffusion vidéo ou TV orienté ATM et
- que ledit au moins un dispositif de communication à large bande décentralisé (DKE1...3) représente une SetTopBox ATM, à l'aide de ladite SetTopBox ATM
-- les flux de données ATM transmis sans fil étant convertis en signaux vidéo ou TV et
-- les signaux de commande nécessaires pour la sélection ou la demande des signaux vidéo ou TV étant convertis en flux de données ATM.

16. Système de communication selon l'une des revendications 2 à 15,
**caractérisé en ce que**
les moyens d'émission placés dans les dispositifs de transmission sans fil décentralisés (DUE1...3) sont configurés de telle manière que les flux de données ATM à transmettre sans fil dudit au moins un dispositif de communication à large bande décentralisé (DKE1...3) au dispositif de communication à large bande centralisé (ZKE) sont transmis selon un procédé d'accès TDMA.

17. Système de communication selon l'une des revendications précédentes,
**caractérisé en ce que**
les moyens de modulation, de démodulation et d'émission placés dans le système de communication sont configurés de telle manière que l'on obtient lors d'une transmission sans fil de flux de données ATM avec un taux d'erreurs sur les bits de 10⁻¹⁰ une portée maximale de 500 mètres.
